# EUROPÄISCHE PATENTSCHRIFT

(11) **EP 0 687 199 B1**
(45) Veröffentlichungstag und Bekanntmachung des Hinweises auf die Patenterteilung: **04.06.1997**
(21) Anmeldenummer: 94909898.2
(22) Anmeldetag: 01.03.1994
(51) Int. Cl.: B01J 2/04, B01J 2/08

(54) **VERFAHREN ZUR HERSTELLUNG KUGELFÖRMIGER TEILCHEN**
METHOD OF PRODUCING SPHERICAL PARTICLES
PROCEDE PERMETTANT DE PRODUIRE DES PARTICULES SPHERIQUES

(30) Priorität: 05.03.1993 DE 4306875; 18.02.1994 DE 4405202
(43) Veröffentlichungstag der Anmeldung: 20.12.1995
(73) Patentinhaber: Solvay Deutschland GmbH, D-30173 Hannover (DE)
(72) Erfinder: DERLETH, Helmut, D-31582 Nienburg (DE); BRETZ, Karl-Heinz, D-31582 Nienburg (DE)
(74) Vertreter: Lauer, Dieter, Dr.
(86) Internationale Anmeldenummer: EP9400587
(87) Internationale Veröffentlichungsnummer: WO9420203

(56) Entgegenhaltungen:
- EP-A- 0 097 539
- EP-A- 0 359 074
- WO-A-92/07653
- FR-A- 2 397 231

## Beschreibung

Die vorliegende Erfindung betrifft ein Verfahren zur Herstellung kugelförmiger Teilchen auf der Basis anorganischer Oxide und die Verwendung der nach diesem Verfahren erhältlichen Teilchen.

Kugelförmige Teilchen auf der Basis anorganischer Oxide, z. B. auf der Basis von Siliciumdioxid, Aluminiumoxid, Alumosilikat, Magnesiumoxid, Titandioxid oder Zirkoniumdioxid, werden in großem Maßstab als Katalysatoren, Katalysatorträger, Adsorbentien, Trockenmittel oder Ionenaustauscher verwendet. Für die meisten der genannten Anwendungszwecke werden Teilchen mit einer gleichmäßigen kugelförmigen Gestalt und einem engen Kornspektrum benötigt, um somit eine möglichst gleichmäßige Packung und hohe Packungsdichte z. B. im Festbettreaktor zu ermöglichen. Werden die Teilchen im Bewegtbettreaktor eingesetzt, so wird von den Teilchen noch eine erhöhte Abriebfestigkeit erwartet. Sollen die Teilchen als Katalysatoren oder Katalysatorträger verwendet werden, so müssen sie neben einem engen Kornspektrum darüber hinaus noch eine bestimmte spezifische Oberfläche und spezifisches Porenvolumen aufweisen.

Üblicherweise werden kugelförmige Teilchen auf der Basis anorganischer Oxide, beispielsweise auf der Basis von Siliciumdioxid, Aluminiumoxid, Alumosilikaten und/oder anderen Oxiden nach dem allgemein bekannten Sol-Gel-Verfahren erhalten. Die Herstellung kugelförmiger Siliciumdioxid-Teilchen erfolgt gemäß diesem Verfahren, wie es z. B. in der DE-AS 1 667 669 beschrieben ist, indem man eine wäßrige Lösung eines Alkalimetallsilikates mit einer wäßrigen Lösung einer Säure miteinander vermischt. Man erhält dabei ein Sol, welches intropfenförmige Teilchen überführt wird, die anschließend in einem sogenannten Formöl zur Gelierung gebracht werden. Als Formöl wird dabei zumeist eine mit Wasser nicht mischbare Flüssigkeit, z.B. Mineralöl, Rohpetroleum oder Kerosin, verwendet. In einem weiteren Verfahrensschritt wird dann anschließend ein sogenannter Basenaustausch durchgeführt, bei dem der Alkalimetallgehalt der erhaltenen Teilchen in einem wäßrigen Medium auf weniger als 1 Gew.-%, bezogen auf die Trockensubstanz vermindert wird. Anschließend werden die Teilchen dann noch gewaschen, getrocknet und kalziniert. Nach diesem Verfahren hängt die Ausformung der gebildeten Teilchen von der Geschwindigkeit ab, mit welcher die Soltropfen durch das Formöl hindurchfallen, wobei die Sinkgeschwindigkeit der Soltropfen vom spezifischen Gewicht und von der Viskosität der als Formöl verwendeten Flüssigkeit abhängt. Nach einer anderen an sich bekannten Methode kann die Ausformung der Teilchen auch dadurch erfolgen, daß man die nach dem Zusammenfügen der Alkalimetallsilikatlösung zur wäßrigen Säurelösung erhaltenen Soltropfen unter Einwirkung der Schwerkraft durch eine Luftsäule fallen läßt, wobei die Tropfen während des Fallens gelieren. Nach dieser Methode müssen Gelierzeit und Fallhöhe genau aufeinander abgestimmt sein. Bei noch nicht genügend verfestigten Tropfen besteht die Gefahr, daß sie beim Aufprall auf die Reaktionsflüssigkeit deformiert werden.

Nach der WO 92/07653 ist ein Sol-Gel-Verfahren bekannt, nach dem kugelförmige Teilchen auf der Basis von Aluminiumoxid hergestellt werden. Hierbei werden kugelförmige Tropfen aus einem Aluminiumoxid-Hydrosol durch eine in Vibration versetzte Düsenplatte erzeugt, welche man durch seitliches Anblasen mit Ammoniakgas vorverfestigt und dann in einer wäßrigen Ammoniaklösung auffängt. Bei der Herstellung von Teilchen größeren Durchmessers muß man die Teilchen üblicherweise eine Schaumschicht passieren lassen, damit der Aufschlag der Teilchen auf die Ammoniaklösung gebremst wird, um somit eine Deformation bzw. ein Auseinanderbrechen der Tropfen zu verhindern. Das verwendete Aluminiumoxidsol bzw. die Aluminiumoxidsuspension sollte nach diesem Verfahren eine bestimmte Viskosität im Bereich von 10 bis 500 mPa bei Raumtemperatur aufweisen.

In der US 2 652 371 wird ein Verfahren zur Herstellung und Größenklassifizierung von Siliciumdioxid-Teilchen beschrieben, bei dem man Natriumsilikat-Soltropfen im schrägen Winkel versprüht, wobei man durch Anblasen mit einem Inertgas einen breiten Strahl von Soltropfen unterschiedlicher Größe erzeugt, der eine Größenklassifizierung aufgrund der unterschiedlichen von der Masse der jeweiligen Tropfen abhängigen Flugweiten ermöglicht. ("Cross-flow-Verfahren") Hierbei erhalten nur die Tropfen mit der erwünschten Größe Zugang zur die Gelierung bewirkenden Reaktionsflüssigkeit, während die restlichen Soltropfen über eine Auffangvorrichtung zur Tropfenerzeugung zurückgeführt werden. Dies setzt zur Vermeidung größerer Ausschußmengen voraus, daß die Gelierung der Soltropfen erst in der Reaktionsflüssigkeit einsetzt, so daß auch bei dieser Methode die Gefahr der Deformation beim Aufprall der noch nicht verfestigten Teilchen auf die Reaktionsflüssigkeit gegeben ist.

Nach der US 3 558 508 ist ein Verfahren zur Herstellung von Aluminiumoxidkugeln bekannt, bei dem ein saures Aluminiumoxidhydrat in ein mit gasförmigen Ammoniak gesättigtes Gemisch aus Mineralöl und Tetrachlorkohlenstoff vertropft wird. Die hierbei erhaltenen Teilchen weisen eine breite Verteilung der Porendurchmesser mit einem großen Anteil von Makroporen über 200 Å auf.

Es besteht somit weiterhin Bedarf nach einem Verfahren, nach dem kugelförmige Teilchen auf der Basis anorganischer Oxide nach einem Sol-Gel-Prozeß mit einer möglichst optimalen Kugelgestalt, einem engen Kornspektrum sowie einer engen Verteilung der Porendurchmesser hergestellt werden können.

Aufgabe der Erfindung war es daher, ein Verfahren zur Herstellung kugelförmiger Teilchen auf der Basis anorganischer Oxide zur Verfügung zu stellen, welches die Ausformung möglichst gleichmäßig kugelförmig geformter Teilchen mit einem engen Kornspektrum und enger Porendurchmesserverteilung ermöglicht.

Es wurde nun ein Verfahren zur Herstellung kugelförmiger Teilchen auf Basis anorganischer Oxide durch Sol-Gel-Umwandlung gefunden, bei dem man ein Sol in eine ein Reaktionsgas enthaltende Reaktionszone von unten so einsprüht, daß das Sol unmittelbar vor oder erst bei Eintritt in die Reaktionszone in einzelne Solperlen aufreißt und die gebildeten Solperlen auf einer gekrümmten Flugbahn die Reaktionszone durchfliegen, wobei sie vorverfestigt werden, und man anschließend die vorverfestigten Solteilchen in einer Auffangsvorrichtung auffängt. Durch die erfindungsgemäße Verfahrensweise werden Ort und Zeitpunkt der Solperlenbildung auf den Beginn der Gelierung (Vorverfestigung) der Solperlen in vorteilhafter Weise abgestimmt. Die Solperlen, die im Zeitpunkt ihrer Entstehung noch flüssige Soltropfen mit nahezu idealer Kugelform und weitgehend gleichem Kugeldurchmesser sind, werden beim Durchfliegen der Reaktionszone in ihrer nahezu idealen gleichmäßigen Kugelform fixiert, d.h. vorverfestigt, sodaß sie vor deformativen Einwirkungen weitgehend geschützt sind, bevor durch weitere an sich bekannte Maßnahmen des Sol-Gel-Verfahrens die in ihrer Kugelform vorverfestigten Solperlen abschließend stabil gefestigt werden. Hierzu wird die Einsprühvorrichtung in einem bestimmten - vom Fachmann wie unten beschrieben, leicht zu ermittelnden - Abstand unterhalb der Eintrittsöffnung in die Reaktionszone angeordnet, wobei der Abstand in etwa derjenigen Entfernung ausgehend von der Sprühvorrichtung entspricht, in welchem das Sol in Solperlen aufreißt. Zusätzlich wird das Sol aus der Sprühvorrichtung von unten, d.h. entgegen der Schwerkraft, unter einem bestimmten Winkel α in die Reaktionszone eingesprüht, wobei Winkel α hierbei aus einer horizontalen, senkrecht zur Schwerkraft liegenden Achse und der Tangente des versprühten Sols im Austrittspunkt aus dem Sprühsystem gebildet wird.

Wie in Anspruch 1 beschrieben wird, wird nach dem erfindungsgemäßen Verfahren demgemäß ein gelierfähiges Sol von unten nach oben in die Reaktionszone, insbesondere unter einem Winkel α von 80 bis 88°, eingesprüht. Als Sprühvorrichtung können dabei je nach Teilchengrößenbereich Spritzen mit Kanülen unterschiedlichen Durchmessers oder an sich bekannte Sprühdüsen, Schleuderscheiben, Sprühräder, Ultraschalldüsen oder -glocken, Sprühpistolen, Turboglocken, Magnetventile, mechanisch angetriebene Düsen oder Sprühsysteme, wie man sie bei der elektrostatischen Versprühung oder in Jet-Printern (z.B. piezoerregte Düsen) verwendet, eingesetzt werden. Der Teilchengrößenbereich wird dabei über die eingesetzte Sprühvorrichtung variiert. Bei einer gewünschten Teilchengröße im Bereich von 0,01 mm bis 0,3 mm werden daher zweckmäßigerweise Turboglocken, Mikro-Magnetventile oder Sprühdüsen, z.B. an sich bekannte Spiraldüsen (z.B. Spiraldüsen der Firma Spraybest) oder vorzugsweise Ultraschalldüsen eingesetzt. Bei einer gewünschten Teilchengröße im Bereich von 0,3 mm bis 5 mm, insbesondere 0,3 mm bis 3,5 mm, verwendet man zweckmäßigerweise Sprühräder oder bevorzugt Kanülen entsprechenden Durchmessers. Bei sehr geringen Abstand der Sprühvorrichtung zur Eintrittsöffnung der das Reaktionsgas enthaltenden Reaktionszone kann es zweckmäßig sein, z.B. bei der Verwendung von Sprühdüsen oder Kanülen mit kleinem Durchmesser, die Sprühvorrichtung mit einem Spülgas (z.B. Druckluft oder Wasserdampf) anzublasen, um somit eine Verstopfung der Sprühvorrichtung durch zu früh gelierendes Sol zu vermeiden.

Das erfindungsgemäße Verfahren eignet sich generell zur Herstellung von Teilchen, welche durch die Gelierung gelierfähiger Lösungen, d.h. in einer Sol-Gel-Reaktion hergestellt werden können. Das Sol kann dabei als instabiles Sol, welches durch Zusammenfügen zweier Komponenten erhalten wurde, oder als metastabiles Sol, welches erst bei Kontakt mit dem Reaktionsgas geliert, vorliegen. Insbesondere eignet sich das erfindungsgemäße Verfahren zur Herstellung von Teilchen auf Basis anorganischer Oxide durch Sol-Gel-Umwandlung. Anorganische Oxide sind dabei insbesondere die Oxide aus der Gruppe Magnesiumoxid, Aluminiumoxid, Siliciumdioxid, Alumosilikat, Zinkoxid, Titandioxid, Chromoxid, Kupferoxid, Manganoxid, Ceroxid, Zinnoxid, Eisenoxid, Nickeloxid, Bleioxid, Molybdänoxid, Vanadiumoxid, Thoriumoxid, Zirkoniumoxid und/oder Hafniumoxid. Bevorzugte Oxide sind Alumosilikat, Aluminiumoxid und/oder Siliciumdioxid. Der Begriff anorganisches Oxid umfaßt hierbei sowohl die genannten Metalloxide jeweils für sich allein als auch Mischoxide, insbesondere binäre oder tertiäre Mischoxide, deren einer Bestandteil Siliciumdioxid, Aluminiumoxid oder Alumosilikat ist. Unter anorganischen Oxiden werden auch solche Oxide verstanden, die neben den gelbildenden oxidischen Komponenten weitere die anwendungstechnischen und/oder katalytischen Eigenschaften verbessernde Zusätze enthalten.

Das erfindungsgemäße Verfahren läßt sich für die Gelierung von Solen einsetzen, bei denen gemäß dem Sol-Gel-Verfahren ein instabiles Sol, z. B. durch das Zusammenmischen einer alkalischen Komponente mit einer sauren Komponente, erhalten wird. Vorzugsweise werden nach dieser Vorgehensweise Teilchen auf der Basis von Siliciumdioxid oder Alumosilikat hergestellt. So kann z. B. ein im erfindungsgemäßen Verfahren einsetzbares Siliciumdioxid enthaltendes Sol erhalten werden, indem man als alkalische Komponente eine wäßrige Lösung eines Alkalimetallsilikates, z. B. eine Natriumsilikatlösung, mit der wäßrigen Lösung einer anorganischen Säure, z. B. einer wäßrigen Schwefelsäure- oder Salzsäure-Lösung, oder einer organischen Säure, z. B. einer wäßrigen Ameisensäure- oder Essigsäurelösung in an sich bekannter Weise miteinander vermischt. Sowohl der alkalischen als auch der sauren Komponente können dabei noch weitere Bestandteile, beispielsweise Aluminium- oder Magnesiumverbindungen beigefügt sein. In einer anderen Variante kann ein Siliciumdioxid enthaltendes instabiles Sol erhalten werden, indem man Kieselsäurealkylester mit einer alkalischen Komponente, z.B. mit NaOH, NH₃, oder einer sauren Komponente, z.B. mit Salzsäure, oder Siliciumtetrachlorid mit einer sauren Komponente, z.B. mit wäßriger Ameisensäure, umsetzt. Eine weitere Möglichkeit zur Herstellung Siliciumdioxid enthaltender Teilchen, welche im erfindungsgemäßen Verfahren erhalten werden können, besteht in der Verwendung von metastabilem Kieselsol (z. B. Bayer S200^{R}).

Nach dem erfindungsgemäßen Verfahren können auch Sole eingesetzt werden, welche weitere Komponenten in homogener oder heterogener Form enthalten. Als heterogene Komponenten können sie z. B. Feinanteile jeder an sich bekannten Art, Menge und Teilchengröße enthalten. Zur Verbesserung der anwendungstechnischen Eigenschaften können z. B. als Feinanteile Füllstoffe beigefügt sein; z. B. Füllstoffe aus der Gruppe Kieselsäuren, Alumosilikate, Aluminiumoxide, Titandioxid, Kaolin, Montmorillonit, Bentonit, Zeolith, Stärke, Holzmehl oder Aktivkohle. Diese Füllstoffe können der sauren und/oder alkalischen Komponente in kristalliner oder amorpher Form oder auch in hochdisperser Form, wie es in der DE 42 16 868 beschrieben wird, zugefügt werden. Auch Feinanteile, die die katalytischen Eigenschaften der Teilchen verändern, können auf an sich übliche Weise eingesetzt werden. Als homogene Komponenten können z. B. Magnesium-, Zirkonium Kupfer-, Blei- oder Titanacetylacetonate zugesetzt sein.

Die Vermischung der alkalischen Komponente mit der sauren Komponente zu einem gelierfähigen instabilen Sol kann auf an sich bekannte Weise in jeder hierfür geeigneten Mischvorrichtung, z. B. einer Mischdüse, durchgeführt werden. Anschließend wird das so erhaltene Sol unmittelbar in eine Sprühvorrichtung gepumpt, mit der es auf erfindungsgemäße Weise von unten in das Reaktionsgas eingesprüht werden kann.

Das erfindungsgemäße Verfahren kann insbesondere auch zur Herstellung kugelförmiger Teilchen auf der Basis von Aluminiumoxid eingesetzt werden. Hierfür setzt man an sich bekannte metastabile saure Aluminiumoxidhydratsole ein, die gegebenenfalls noch weitere die anwendungstechnischen Eigenschaften verbessernde Komponenten enthalten. Geeignete Aluminiumoxidhydratsole können entsprechend dem Stand der Technik aus Aluminiumoxiden, z.B. aus Tonerdehydraten wie Boehmit, Pseudo-Boehmit, Hydrargillit oder Bayerit, durch Dispergieren in wäßriger Säure, z. B. in Salpetersäure, hergestellt werden. Auch ist es möglich, auf bekannte Weise aus Aluminiumhydroxid und Aluminiumhalogeniden, z. B. AlBr₃, AlCl₃, oder metallischem Aluminium durch Einwirkung von verdünnter Säure, z. B. HCl, erhaltene Aluminiumoxidhydratsole oder Dispersionen im erfindungsgemäßen Verfahren einzusetzen. Die Gelierung des Sols kann hierbei auf unterschiedliche, an sich bekannte Verfahrensweisen bewirkt bzw. bei Einsatz von selbstgelierenden Solen unterstützt werden. So kann die Gelbildung sowohl chemisch als auch physikalisch, z.B. durch pH-Wert-Änderung (zum Sauren oder Alkalischen), Temperaturänderung (Erwärmen oder Abkühlen) sowie bspw. photochemische Initiierung ausgelöst und unterstützt werden.

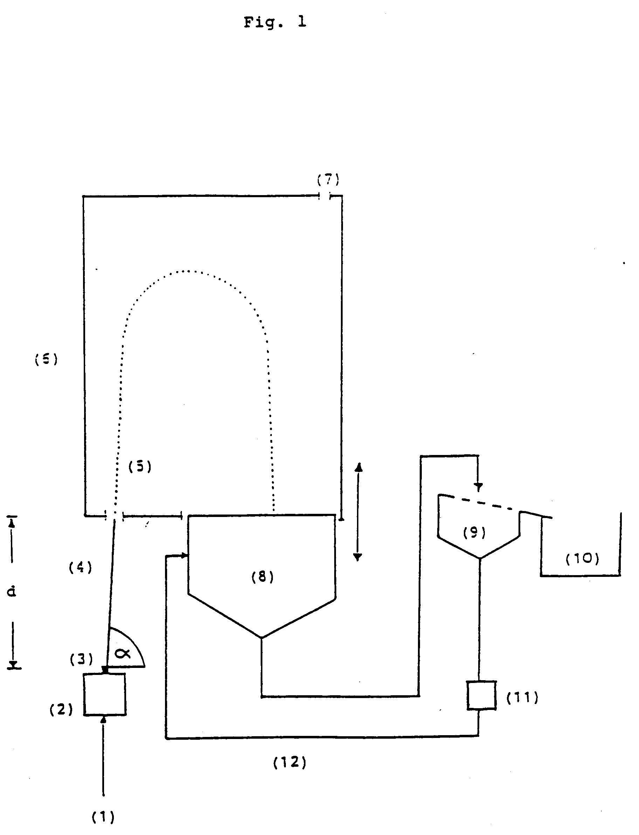

In Figur 1 ist beispielhaft der Aufbau einer Vorrichtung zur Durchführung des erfindungsgemäßen Verfahrens schematisch dargestellt. Durch ein Sprühsystem wird das gelierfähige Sol von unten nach oben in einem Winkel α von 80 bis 88°, in die Reaktionszone so eingesprüht, daß das Sol nach dem Verlassen des Sprühsystems erst unmittelbar vor oder beim Passieren der Eintrittsöffnung in die Reaktionszone in weitgehend gleichgroße Solperlen aufgerissen wird, wobei die Solperlen im Augenblick ihrer Bildung praktisch sofort der gelierenden Wirkung des Reaktionsgases ausgesetzt sind. Der Zerfall des Sols in einzelne Solperlen hängt neben dem Winkel dabei von der Viskosität des Sols, der jeweils eingesetzten Sprühvorrichtung sowie dem Druck, mit dem das Sol die Sprühvorrichtung verläßt, ab. Um den Punkt, an dem das Sol in einzelne Solperlen aufreißt, erfindungsgemäß einzustellen, wird der Abstand d zwischen Sprühvorrichtung und Eintrittsöffnung in die Reaktionszone zu Beginn des Sprühvorganges vom Fachmann durch Inaugenscheinnahme so variiert, d.h. der Abstand d vermindert oder ggf. vergrößert, bis der Aufreißpunkt des Sols in einzelne Solperlen sich unmittelbar vor oder in der Eintrittsöffnung zur Reaktionszone befindet.

Nach Eintritt in die Reaktionszone durchfliegen die gebildeten Solperlen eine in Form einer Parabel gekrümmte Flugbahn durch das sich in der Reaktionszone befindliche Reaktionsgas, wobei sie in ihrer Kugelform fixiert, d.h. vorverfestigt werden. Dadurch, daß die Solperlen diese parabelförmige Flugbahn durch das Reaktionsgas passieren müssen, kann das Reaktionsgas nach dem erfindungsgemäßen Verfahren besonders lange zur Vorverfestigung der Solperlen beitragen, sodaß dadurch die Gefahr der Deformation der Solperlen beim Auftreffen auf die Auffangvorrichtung bereits weitgehend minimiert ist. Durch zusätzliches Erwärmen der Reaktionszone, z.B. durch Erwärmen auf etwa 200°C, kann die Vorverfestigung der Teilchen gegebenenfalls noch weiter unterstützt werden. Um die Gefahr der Deformation noch weiter zu verringern, kann gewünschtenfalls eine in der Höhe verstellbare Auffangvorrichtung nahe an den Umkehrpunkt der parabelförmigen Flugbahn der Solperlen, an dem die Solperlen ihre geringste kinetische Energie besitzen, herangebracht werden.

Als Auffangvorrichtung kann im erfindungsgemäßen Verfahren eine flachgezogene Folie, z.B. eine PVDF-Folie oder PE- oder PVC-Folie oder ein glattes Auffangblech oder ein mit Flüssigkeit gefüllter Auffangbehälter eingesetzt werden. Bei Verwendung eines glatten Auffangbleches kann dieses als solches gekühlt werden oder es kann ein gleichmäßig mit festem Kohlendioxid bedecktes Blech eingesetzt werden. Besonders bevorzugte Verfahrensvarianten verwenden als Auffangvorrichtung einen mit einer Flüssigkeit, z.B. mit Wasser oder vorzugsweise mit einer Reaktionsflüssigkeit gefüllten Auffangbehälter. Unter Reaktionsflüssigkeiten werden dabei alle üblichen sauren bzw. alkalischen Flüssigkeiten verstanden, wie sie üblicherweise für die Alterung von Teilchen nach dem Sol-Gel-Verfahren eingesetzt werden. Gebräuchliche Reaktionsflüssigkeiten sind hierfür z.B. wäßrige Ammoniaklösung, z.B. eine 5 bis 10 %ige wäßrige Ammoniaklösung, oder saure Reaktionsflüssigkeiten wie Salzsäure, Schwefelsäure oder Salpetersäure in Konzentrationen von 1 bis 5 Gew.-%. Bei Verwendung einer Reaktionsflüssigkeit sollten zweckmäßigerweise in der Reaktionszone hierzu äquivalente Reaktionsgase eingesetzt werden. Legt man als Reaktionsflüssigkeit z.B. eine wäßrige Ammoniaklösung vor, so sollten als Reaktionsgas Ammoniak-Gas oder Dämpfe organischer Amine eingesetzt werden. Bei Verwendung saurer Reaktionsflüssigkeiten wie Salzsäure, Schwefelsäure oder Salpetersäure sollten die hierzu äquivalenten sauren Reaktionsgase, also Chorwasserstoff, Schwefeldioxid bzw. Stickoxide verwendet werden.

Das im erfindungsgemäßen Verfahren verwendete Reaktionsgas kann in der Reaktionszone als geschlossenem Behältnis über der entsprechenden Auffangvorrichtung leicht gehalten werden. Frisches Reaktionsgas kann dabei nach Bedarf ständig durch eine separate Gaszufuhr in die Reaktionszone nachgefüllt werden. Neben den bereits genannten alkalischen bzw. sauren Reaktionsgasen können bei der Verwendung selbstgelierender Sole als Reaktionsgase auch inerte Gase wie Luft oder Stickstoff eingesetzt werden, wobei gegebenenfalls hierbei die Vorverfestigung der Solteilchen durch Erwärmen der Reaktionszone auf Temperaturen von bis zu 1000°C oder höher, vorzugsweise 500 bis 800°C, unterstützt werden kann. Bei Verwendung von einem gleichmäßig mit festem Kohlendioxid bedeckten Auffangblech als Auffangvorrichtung kann die Reaktionszone gegebenenfalls auch auf Temperaturen unterhalb der Raumtemperatur gekühlt werden, um auf diese Weise durch Erniedrigung der Viskosität die Vorverfestigung der Solteilchen zu unterstützen.

Von der Auffangvorrichtung können die vorverfestigten Solteilchen der Aufarbeitung, wie sie üblicherweise für nach dem Sol-Gel-Prozeß hergestellten Teilchen durchgeführt werden, zugeführt werden. Diese Aufarbeitung umfaßt üblicherweise die Aufarbeitungsschritte Waschen, Trocknen und ggf. Kalzinieren. So werden die Solteilchen üblicherweise bei Temperaturen im Bereich von 100 bis 200°C für eine Zeitdauer von 1 bis 24 Stunden getrocknet. In einer Variante können die vorverfestigten Solteilchen bei Verwendung einer flachgezogenen Folie oder eines glatten Auffangbleches als Auffangvorrichtung auch direkt in eine Trocknungseinheit, z.B. in einen an sich bekannten Sprühtrockner, überführt werden.

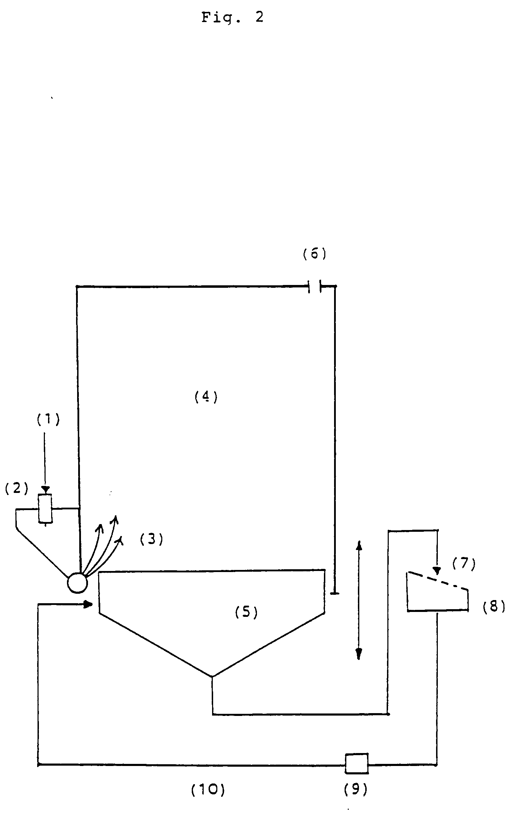

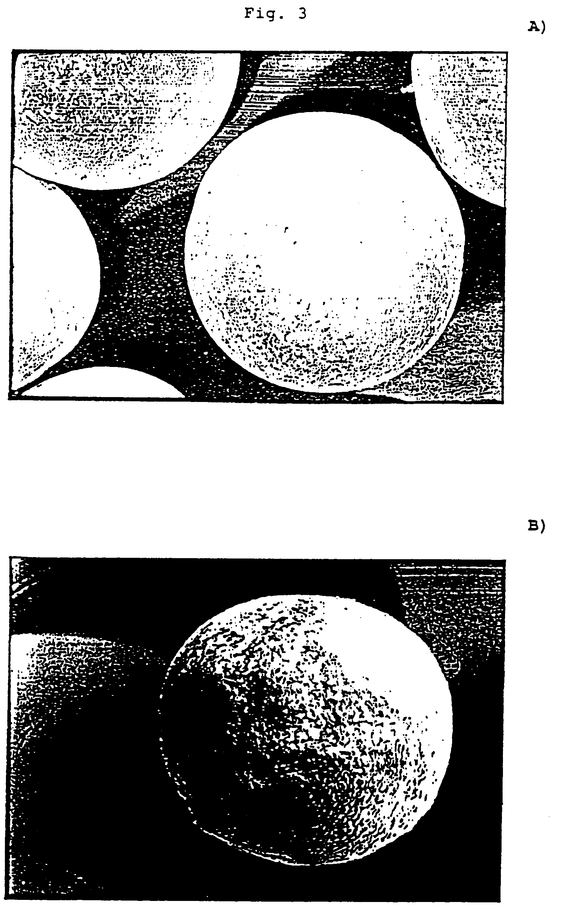

Zur Herstellung besonders kleiner Teilchen, insbesondere von Teilchen mit einem Durchmesser im Bereich von 0,001 mm bis 0,3 mm, wird in einer Abwandlung des erfindungsgemäßen Verfahrens zweckmäßigerweise eine Vorrichtung eingesetzt, wie sie schematisch in Figur 2 dargestellt ist. Diese Vorrichtung unterscheidet sich von der in Figur 1 dargestellten dadurch, daß sehr kleine Solperlen als Nebel von unten in die Reaktionszone eingesprüht werden. In dieser Verfahrensvariante werden durch eine Düse, zweckmäßigerweise eine Spiraldüse oder vorzugsweise eine Ultraschalldüse, die kleinen Solperlen als Nebel erzeugt, welche dann erfindungsgemäß von unten nach oben, z.B. mit einem aus Lüftungsanlagen bekannten Flügelventilator, in die das Reaktionsgas enthaltende Reaktionszone eingesprüht werden. Die weiteren Schritte erfolgen anschließend analog den Verfahrensschritten, wie sie oben bereits für die in Figur 1 dargestellte Verfahrensweise für größere Teilchen beschrieben sind.

Die nach den vorstehenden Verfahrensvarianten erhaltenen kugelförmigen Teilchen können in einer weiteren Ausgestaltung dieser Verfahren noch einer Behandlung mit einem niederen Alkylalkohol, insbesondere einem C₁- bis C₄-Alkohol, wie z. B. Methanol, Ethanol, Propanol oder Isopropanol, oder einer Behandlung mit Aceton unterzogen werden, bevor sie nach dem Auffangen in der Auffangvorrichtung der Trocknung zugeführt werden. Vorzugsweise setzt man Isopropanol, welches möglichst wasserfrei sein sollte, für diese Behandlung ein. Durch die Behandlung mit einem niederen Alkylalkohol oder Aceton kann zum einen in vorteilhafter Weise ein Verkleben der erhaltenen Teilchen, insbesondere von Teilchen mit einem durchschnittlichen Durchmesser kleiner 1 mm, beim Trocknen vermieden werden, zum anderen kann durch diese Behandlung das Porenvolumen der erhaltenen Teilchen aufgeweitet werden. Hierfür werden die Teilchen aus der Auffangsvorrichtung in ein Behältnis überführt und für eine Zeitdauer von 1 Minute bis 24 Stunden, zweckmäßigerweise 2 bis 3 Stunden, mehrmals mit Alkohol überschichtet. So kann z.B. durch diese Behandlung das Porenvolumen auch von Aluminiumoxidteilchen gezielt verändert werden. So liegt z. B. das Porenvolumen von nach dem erfindungsgemäßen Verfahren hergestellten Aluminiumoxidteilchen nach Behandlung mit einem niederen Alkylalkohol im Bereich von 0,4 bis 2,5 ml/g (bestimmt nach dem Trocknen).

Durch das erfindungsgemäße Verfahren ist es in vorteilhafter Weise möglich, Teilchen auf der Basis anorganischer Oxide mit einer sehr gleichmäßigen Kugelgestalt, einer engen Verteilung der Porendurchmesser sowie einem sehr engen Kornspektrum zu erhalten. Hierbei kann der Anfall größerer Mengen an Unter- bzw. Überkorn weitgehend vermieden werden. Unter einem engen Kornspektrum wird dabei ein Kornspektrum verstanden, bei dem 80% der Teilchen einen Durchmesser innerhalb des in der nachfolgenden Tabelle angegebenen Bereichs um den jeweiligen mittleren Durchmesser aufweisen (Gaußverteilung).

| mittlerer Durchmesser der Teilchen Bereich von [mm] | Kornspektrum, welches 80% der Teilchen um den jeweiligen mittleren Durchmesser besitzen [mm] |
|---|---|
| 1,0 - 5,0 | ± 1,0 |
| 0,1 - 1,0 | ± 0,1 |
| 0,01 - 0,1 | ± 0,02 |
| 0,001 - 0,01 | ± 0,004 |

Im erfindungsgemäßen Verfahren braucht kein Formöl eingesetzt zu werden, so daß die so hergestellten Teilchen frei von weiteren Verunreinigungen oder Verfärbungen sind. Auch läßt sich bei nach dem erfindungsgemäßen Verfahren hergestellten Teilchen durch eine Behandlung mit Aceton oder einem niederen Alkylalkohol vor dem Trocknen das Porenvolumen in vorteilhafter Weise aufweiten. Darüber hinaus zeigen die nach dem erfindungsgemäßen Verfahren hergestellten kugelförmigen Teilchen eine überraschend hohe Abriebfestigkeit.

Durch das erfindungsgemäße Verfahren ist es moglich kugelförmige Teilchen auf Basis anorganischer Oxide zu erhalten, vorzugsweise auf Basis von Siliciumdioxid, Aluminiumoxid oder Alumosilikat, welche
a) einen Durchmesser im Bereich von 0,01 bis 5 mm, vorzugsweise 0,02 bis 3,5 mm,
b) eine spezifische Oberfläche im Bereich von 1 bis 900 m²/g, vorzugsweise 100 bis 800 m²/g,
c) ein Schüttgewicht im Bereich von 0,1 bis 1,0 g/ml,
d) ein Porenvolumen im Bereich von 0,25 bis 2,5 ml/g,
e) eine Verteilung der Porendurchmesser mit einem Maximum (monomodale Porenverteilung) im Bereich von 15 bis 2000 Å, vorzugsweise 15 bis 400 Å,
aufweisen.

Die spezifische Oberfläche, das Porenvolumen und die Porenverteilung der Teilchen kann durch Quecksilber-Porosimetrie bzw. Aufnahme und Auswertung von Stickstoff-Sorptionskurven auf an sich bekannte Weise bestimmt werden. Das Maximum der Porendurchmesser und der mittlere Porendurchmesser lassen sich dann hieraus ermitteln.

Bevorzugt zeigen die Teilchen eine monomodale Porenverteilung, bei der 80 %, vorzugsweise 95 %, der Porendurchmesser der Formel 0,8 R ≤ R ≤ 1,2 R entsprechen, wobei R dem mittleren Porendurchmesser im Bereich von 15 bis 400 Å entspricht.

Besonders bevorzugt sind dabei Teilchen auf der Basis von Aluminiumoxid, welche ein Porenvolumen im Bereich von 0,5 bis 2,5 ml/g, vorzugsweise 0,7 bis 2,5 ml/g, und einen mittleren Porendurchmesser R im Bereich von 60 bis 380 Å aufweisen.

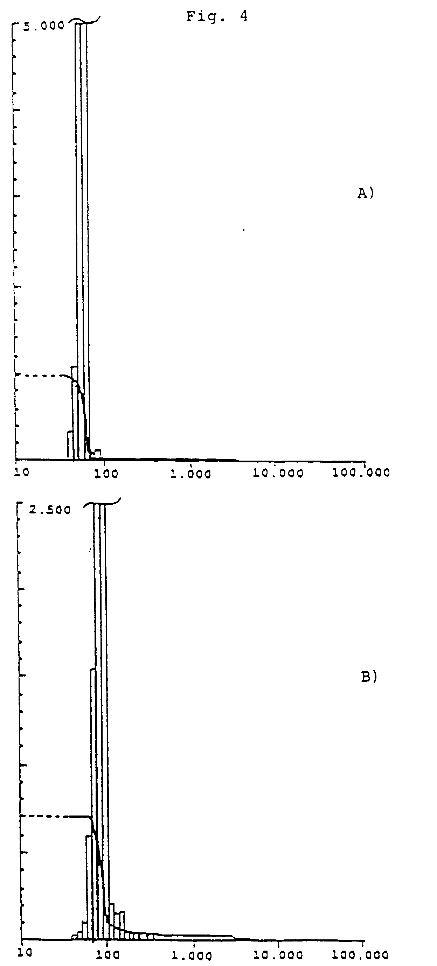

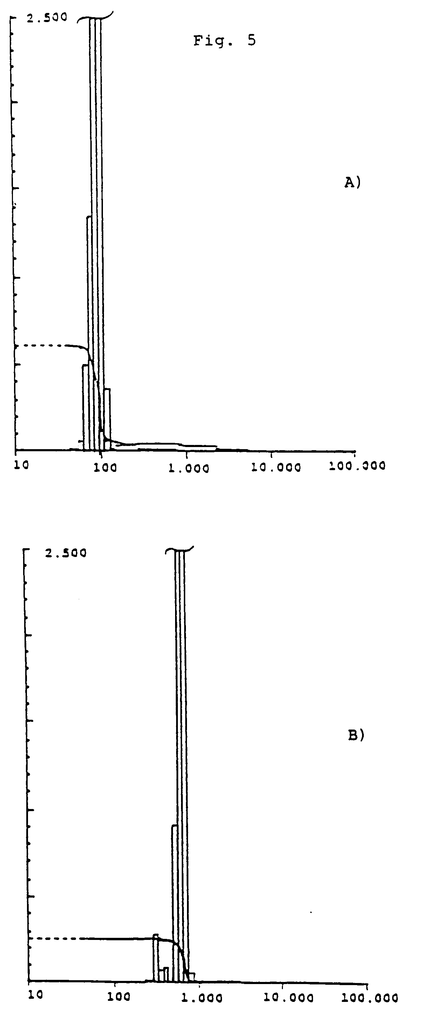

Die Teilchen können bevorzugt nach dem bereits angegebenen erfindungsgemäßen Verfahren hergestellt werden. Neben einer besonders gleichmäßigen Kugelform und engem Kornspektrum zeichnen die Teilchen sich durch ein hohes Porenvolumen bei einer ungewöhnlich engen Verteilung der Porendurchmesser aus. Hierbei ist besonders vorteilhaft, daß mindestens 80 %, vorzugsweise 95 % der Teilchen einen Porendurchmesser aufweisen, der im bereits angegebenen Toleranzbereich von 0,8 R ≤ R ≤ 1,2 R liegt. Der Anteil von Makroporen, d. h. von Poren mit einem Durchmesser von über 200 Å, liegt dabei unter 5 %. Die Teilchen weisen damit eine besonders homogene Oberfläche auf, was besonders für deren Verwendung als Katalysatorträger sehr vorteilhaft ist. In Figur 3A und 3B sind exemplarisch elektronenmikroskopische Aufnahmen der Oberflächen erfindungsgemäß hergestellter Teilchen dargestellt, die deren homogene gleichmäßige Oberflächenstruktur zeigen. Eine weitere besondere Eigenschaft der Teilchen besteht darin, daß sie bei ihrem hohen Porenvolumen eine überraschend hohe Abriebfestigkeit zeigen, was sie im Zusammenhang mit der hohen Schüttdichte besonders geeignet für die Verwendung als Katalysatoren oder Katalysatorträger in Fließbett- bzw. Wirbelschichtreaktoren macht.

Weiterhin umfaßt die Erfindung die Verwendung der nach dem erfindungsgemäßen Verfahren hergestellten kugelförmigen Teilchen als Katalysatoren, Katalysatorträger, Ionenaustaucher, Adsorptions- und Trocknungsmittel.

So können z. B. mit Edelmetallen oder Übergangsmetallen dotierte Katalysatoren hergestellt werden, welche die nach dem erfindungsgemäßen Verfahren hergestellten Teilchen als Katalysatorträger enthalten. Beispielsweise können sie Edelmetalle wie Gold, Silber, Platin, Rhodium oder Palladium oder Übergangsmetalle wie Kupfer enthalten. Der Gehalt an solchen Metallen liegt üblicherweise im Bereich von 0,1 bis 5 Gew.-%, bezogen auf den fertigen Katalysatorträger. Weiterhin können auch Metallverbindungen, z. B. Oxide von Metallen, insbesondere Oxide von Übergangsmetallen, z. B. Oxide von Mangan, Eisen, Nickel oder Kobalt, enthalten sein. Natürlich können auch Gemische von Metallen, Gemische von Metallverbindungen oder Gemische von einem oder mehreren Metallen und einem oder mehreren Metallverbindungen auf dem Träger aufgebracht sein. Beispielsweise kann die Metallkomponente eines erfindungsgemäßen Katalysators aus Palladium und/oder Rhodium oder aus Palladium und Kupfer bestehen. Derartige Katalysatoren auf der Basis der Teilchen können z. B. in petrochemischen oder organisch-chemischen Synthese-Verfahren, z. B. in Oxidations-, Hydrier-, Oxichlorierungs- oder Polymerisationsverfahren, oder in katalytischen Verfahren zur Abwasser- und Abgasreinigung eingesetzt werden. Die Herstellung der erfindungsgemäßen Katalysatoren kann auf an sich bekannte Weise erfolgen. Beispielsweise kann man Metallsalze oder komplexe Metallverbindungen im Imprägnierverfahren, Sprühverfahren oder Fällungsverfahren auf die Teilchen aufbringen und nach Trocknung und Kalzinierung gewünschtenfalls reduzieren. Bevorzugt werden die Metalle durch ein Imprägnierverfahren, z. B. mit einer Lösung oder Suspension von Metallsalzen oder komplexen Metallverbindungen in Wasser oder einem organischen Lösungsmittel, auf die Teilchen aufgebracht. Ein Vorteil der auf Basis der erfindungsgemäß hergestellten Teilchen erhaltenen Katalysatoren ist deren hohe Abriebfestigkeit.

Die nachfolgenden Beispiele sollen die Erfindung erläutern, ohne sie jedoch einzuschränken.

### Figuren 1 bis 8:

Figur 1:
   Schematischer Aufbau einer Vorrichtung zur Durchführung des erfindungsgemäßen Verfahrens:
   (1): Sol, (2): Pumpe, (3): Sprühvorrichtung, (4): Solstrahl, (5): Solperlen, (6): Reaktionszone mit Reaktionsgas, (7): Reaktionsgaszufuhr, (8): Auffangvorrichtung, (9): Sieb (fakultativ) (10): Sammelbehälter für die Teilchen, (11): Pumpe (fakultativ), (12): Rücklauf der Reaktionsflüssigkeit in den Auffangbehälter (fakultativ), α: Winkel α ; d: variabler Abstand zwischen Sprühvorrichtung und Eintrittsöffnung in die Reaktionszone
Figur 2:
   Schematischer Aufbau einer weiteren Vorrichtung zur Durchführung des erfindungsgemäßen Verfahrens für kleine Teilchen (0,001 bis 0,3 mm):
   (1): Sol, (2): Sprühvorrichtung mit Zerstäuberdüse, (3): Nebel aus kleinen Solperlen, (4): Reaktionszone mit Reaktionsgas, (5): Auffangvorrichtung, (6): Reaktionsgaszufuhr, (7): Sieb (fakultativ), (8): Sammelbehälter, (9): Pumpe (fakultativ), (10) Rücklauf der Reaktionsflüssigkeit in den Auffangbehälter (fakultativ)
Figur 3:
   Elektronenmikroskopische Aufnahmen zur Oberflächenbeschaffenheit erfindungsgemäß hergestellter Teilchen:
   Figur 3A: Teilchen auf Basis von Alumosilikat mit 2,5 - 3,5 mm Durchmesser
   Figur 3B: Teilchen auf Basis von Siliciumdioxid mit 0,4 - 0,6 mm Durchmesser
Figur 4 bis 8:
   Diagramme der Porenradienverteilung erfindungsgemäß hergestellter Teilchen nach Quecksilber-Porosimetrie:
   Es sind jeweils auf den Achsen aufgetragen:
   - x-Achse:: Porenradius [Å]
   - y-Achse:: kumuliertes Porenvolumen [mm³/g]

### Beispiele

Die folgenden Beispiele 1 bis 8 wurden in einer Vorrichtung gemäß Fig. 1 durchgeführt.

### Beispiel 1:

Nach dem erfindungsgemäßen Verfahren wurden kugelförmige Teilchen auf der Basis von Siliciumdioxid hergestellt. Hierfür wurden jeweils separat eine saure Lösung und eine alkalische Silikatlösung mit den in Tabelle 1 angegebenen Konzentrationen hergestellt. Als Füllstoffe wurden den Lösungen zusätzlich noch die ebenfalls in Tabelle 1 angegebenen Maischen zugefügt. Die saure bzw. alkalische Lösung wurde mit der entsprechenden Aerosil- bzw. SiO₂-Maische im in Tabelle 1 angegebenen Volumenverhältnis zur jeweiligen sauren bzw. alkalischen Komponente vereinigt.

Die saure Komponente SK und die alkalische Komponente AK wurden in einer an sich bekannten Mischdüse bei einer Temperatur von ca. 10 °C miteinander vermischt und in einer Vorrichtung gemäß Fig. 1 sofort und kontinuierlich weiterverarbeit. Hierfür wurde das aus dem Zusammenmischen der beiden Komponenten unter einer Druckdifferenz von wenigstens 2 bar bei pH 6,4 erhaltene Sol über die Pumpe (2) und die Kanüle (3) (Durchmesser: 3,7 mm; Länge: 10 cm) mit einem Durchsatz von 4 l/min in einem Solstrahl (4) in die Reaktionszone (6) in der Weise eingesprüht, daß der Solstrahl (4) bei Eintritt in Reaktionszone (6) in Solperlen (5) aufriß. Nach dem Durchfliegen einer gekrümmten Flugbahn durch die das Reaktionsgas enthaltende Reaktionszone (6) wurden die Solperlen (5) in dem mit Reaktionsflüssigkeit gefüllten Auffangbehälter als Auffangvorrichtung (8) aufgefangen. Als Reaktionsgas wurde Ammoniak-Gas eingesetzt, welches über die Reaktionsgaszufuhr (7) ständig in die Reaktionszone (6) nachgefüllt wurde. Als Reaktionsflüssigkeit wurde eine wäßrige 5 %ige Ammoniak-Lösung eingesetzt.

Die Teilchen wurden etwa 30 Minuten in der wäßrigen Ammoniak-Lösung gealtert und anschließend über das Sieb (9) von der Reaktionsflüssigkeit getrennt und in den Sammelbehälter (10) überführt. Die Reaktionsflüssigkeit wurde über die Pumpe (11) durch den Rücklauf (12) wieder zurück in die Auffangvorrichtung (8) gepumpt.

Die erhaltenen Teilchen wurden anschließend auf an sich bekannte Weise einem Basenaustausch mit einer 0,5 %igen Ammoniumsulfatlösung unterzogen, bis zur Sulfatfreiheit gewaschen, für 18 Stunden bei 180 °C getrocknet und für 4 Stunden bei 600 °C getempert. Man erhielt kugelförmige Teilchen mit Durchmessern im Bereich von 2,5 bis 3,5 mm, deren Schüttdichte, spezifische Oberfläche und Porenvolumen in Tabelle 2 angegeben sind.

**Tabelle 1**

| Zusammensetzung der Einsatzlösungen und Einsatzkomponenten | | |
|---|---|---|
| Saure Lösung A: | H₂SO₄ | 15,20 Gew.-% |
| | H₂O | 84,80 Gew.-% |
| | d₂₀: | 1,106 g/ml |
| Aerosil-Maische AM: | Aerosil^{R}200: | 10,00 Gew.-% |
| | H₂O: | 90,00 Gew.-% |
| | d₂₀: | 1,055 g/ml |

| ϕ = V_{AM}:V_{A}= 1,78 | | |
|---|---|---|
| Saure Komponente SK | H₂SO₄: | 5,60 Gew.-% |
| | Aerosil^{R}200: | 6,30 Gew.-% |
| | H₂O: | 88,07 Gew.-% |
| | d₂₀: | 1,235 g/ml |
| Alkalische Lösung B: | Na₂O: | 5,88 Gew.-% |
| | SiO₂: | 19,11 Gew.-% |
| | H₂O: | 75,01 Gew.-% |
| | d₂₀: | 1,235 g/ml |
| SiO₂-Maische AL | SiO₂: | 21,40 Gew.-% |
| | H₂O: | 78,60 Gew.-% |
| | d₂₀: | 1,138 g/ml |

| ϕ' = V_{AL}:V_{B}= 0,395 | | |
|---|---|---|
| Alkalische Komponente AK: | Na₂O: | 4,31 Gew.-% |
| | SiO₂: | 19,72 Gew.-% |
| | H₂O: | 75,97 Gew.-% |
| | d₂₀: | 1,209 g/ml |
| V: Volumen; d₂₀: Dichte bei 20°C | | |

**Tabelle 2**

| Eigenschaften der gemäß Beispiel 1 erhaltenen Verfahrensprodukte | |
|---|---|
| Durchmesser : | 2,5 - 3,5 mm |
| Schüttgewicht: | 0,9 g/ml |
| spezifische Oberfläche: | 334 m²/g |
| Porenvolumen: | 1,01 ml/g |
| Porenradienverteilung: | dargestellt in Fig. 4 A) |

### Beispiel 2:

Nach dem erfindungsgemäßen Verfahren wurden kugelförmige Teilchen auf der Basis von Alumosilikat hergestellt.

Hierfür wurden jeweils separat eine saure Lösung A und eine alkalische Silikatlösung B hergestellt:

| | | |
|---|---|---|
| Lösung A | H₂SO₄ | 9,05 Gew.-% |
| | Al₂(SO₄)₃ | 0,89 Gew.-% |
| | H₂O | 90,06 Gew.-% |
| | d_{20°} | 1,065 g/ml |
| Lösung B | Na₂O | 5,49 Gew.-% |
| | SiO₂ | 18,53 Gew.-% |
| | H₂O | 75,98 Gew.-% |
| | d_{20°} | 1,226 g/ml |

Die saure Lösung A und die alkalische Lösung B wurden in einer an sich bekannten Mischdüse bei einer Temperatur von ca 7 °C miteinander vermischt und in einer Vorrichtung gemäß Fig. 1 sofort und kontinuierlich weiterverarbeitet.

Hierfür wurde das aus dem Zusammenmischen der beiden Komponenten unter einer Druckdifferenz von wenigstens 2 bar bei pH 8,3 erhaltene Sol über eine Kanüle von 3,7 mm Durchmesser und 10 cm Länge in einer Menge von 3,9 l/Minute in einem Solstrahl (4) in die Reaktionszone (6) in der Weise einsprüht, daß der Solstrahl (4) bei Eintritt in die Reaktionszone (6) in Solperlen (5) aufriß.

Nach dem Durchfliegen einer gekrümmten Flugbahn durch das Reaktionsgas wurden die Solperlen (5) in dem mit Reaktionsflüssigkeit gefüllten Auffangbehälter (8) aufgefangen. Als Reaktionsgas wurde HCl-Gas eingesetzt, welches über die Reaktionsgaszufuhr (7) ständig in die Reaktionszone (6) nachgefüllt wurde. Als Reaktionsflüssigkeit wurde eine wäßrige 2,5 %ige HCl-Lösung eingesetzt.

Die Teilchen wurden etwa 30 Minuten in der wäßrigen Chlorwasserstoff-Lösung gealtert und anschließend über das Sieb (9) von der Reaktionsflüssigkeit getrennt und in den Sammelbehälter (10) überführt. Die Reaktionsflüssigkeit wurde über die Pumpe (11) durch den Rücklauf (12) wieder zurück in die Auffangvorrichtung (8) gepumpt.

Die erhaltenen Teilchen wurden anschließend auf an sich bekannte Weise einem Basenaustausch mit 0,5 %iger Schwefelsäurelösung unterzogen, gewaschen bis zur Sulfatfreiheit, für 18 Stunden bei 180 °C getrocknet und für 4 Stunden bei 200 °C getempert.

Man erhielt kugelförmige Alumosilikat-Teilchen mit Durchmessern im Bereich von 2,5 bis 3,5 mm, deren Schüttdichte, spezifische Oberfläche und Porenvolumen in der folgenden Tabelle 3 angegeben sind.

**Tabelle 3**

| Eigenschaften der gemäß Beispiel 2 erhaltenen Verfahrensprodukte | |
|---|---|
| Durchmesser | 2,5 - 3,5 mm |
| Schüttgewicht | 0,77 g/ml |
| Oberfläche | 741 m²/g |
| Porenvolumen | 0,35 ml/g |
| Oberflächenbeschaffenheit: | dargestellt in Fig. 3A) |

### Beispiel 3:

### Kugelförmige Teilchen auf der Basis von Aluminiumoxid wurden folgendermaßen hergestellt:

Ein metastabiles saures Aluminiumoxidhydratsol (Condea Disperal^{R} 30/2) mit einer Zusammensetzung aus 14,19 Gew.-% Al₂O₃ und 85,81 Gew.-% Wasser wurde in einer Vorrichtung nach Fig. 1 mittels der Pumpe (2) bei einem Druck von 6 bar über 10 Kanülen (Durchmesser: 0,70 mm; Länge: 3,2 cm) mit einem Durchsatz von 0,75 l/Minute von unten nach oben versprüht, wobei die Solstrahlen bei Eintritt in die mit Ammoniakgas gefüllte Reaktionszone in eine Folge einzelner gleichgroßer Solperlen aufrissen.

Nachfolgend sind die weiteren Reaktionsbedingungen angegeben:
- Vorlage:: 5 %ige Ammoniaklösung
- Alterung:: 1 h
- Trocknen:: 8 h 120°
- Tempern:: 4 h 600°

Die erhaltenen Teilchen zeigten die folgenden Eigenschaften:

### Beispiel 3a:

| | |
|---|---|
| Durchmesser: | 0,4 - 0,6 mm |
| Schüttgewicht: | 0,71 g/ml |
| spezifische Oberfläche: | 287 m²/g |
| Porenvolumen: | 0,44 ml/g |

### Beispiele 3b bis 3d:

Einige der nach Beispiel 3 erhaltenen Teilchen wurden noch einer zusätzlichen Temperung unterzogen. In der nachfolgenden Tabelle 4 sind deren Eigenschaften dargestellt.

**Tabelle 4**

| Bsp. | zusätzliche Temperung | spezifische Oberfläche [m²/g] | Porenvolumen [ml/g] | Porenradienverteilung siehe in: |
|---|---|---|---|---|
| 3b | 2 h 700°C | 212 | 0,73 | |
| 3c | 2 h 900°C | 163 | 0,72 | Fig. 4B |
| 3d | 2 h 1000°C | 125 | 0,61 | Fig. 5A |
| 3e | 2 h 1200°C | 8 | 0,25 | Fig. 5B |

### Beispiel 4:

Kugelförmige Teilchen auf der Basis von Aluminiumoxid wurden wie in Beispiel 3 angegeben, hergestellt. Zusätzlich wurden diese Teilchen noch einer Behandlung mit wasserfreiem Isopropanol (Dichte: 0,785 g/ml) unterzogen. Für eine Zeitdauer von 2 Stunden wurden dafür die erhaltenen Teilchen vor dem Trocknen mit je 1 Liter Isopropanol pro 1 Liter Teilchen überschichtet. Bei einigen der Teilchen wurde die Isopropanol-Behandlung auch mehrfach durchgeführt, indem die Teilchen aus der Isopropanol-Lösung dekantiert wurden und anschließend wieder für die gleiche Zeitdauer in identischer Weise mit Isopropanol überschichtet wurden. Diese Isopropanol-Behandlung wurde bei einigen Teilchen bis zu achtmal hintereinander durchgeführt. Nach dem Trocknen und Kalzinieren, wie bereits in Beispiel 3 beschrieben, erhielt man Teilchen mit den in der nachfolgenden Tabelle angegebenen Eigenschaften.

Aus Tabelle 5 geht hervor, daß das Porenvolumen, das Schüttgewicht sowie der mittlere Porendurchmesser von nach dem erfindungsgemäßen Verfahren hergestellten Aluminiumoxid-Teilchen sich durch die zusätzliche Alkohol-Behandlung in weiten Bereichen variieren lassen.

**Tabelle 5**

| Eigenschaften der gemäß Beispiel 4 erhaltenen Verfahrensprodukte | | | | | | | |
|---|---|---|---|---|---|---|---|
| | | Al₂O₃, Durchmesser der Teilchen: 0,4 - 0,6 mm | | | | | |
| Bsp. | Alkohol Behandlungen | Schüttgewicht [g/ml] | Porenvolumen [ml/g] | spezifische Oberfläche [m²/g] | mittlerer Porendurchmesser [Å] | Trocknung [h/°C] | Calzination [h/°C] |
| 4a | 1 | 0,53 | 0,75 | 272 | 110 | 8/120 | 4/600 |
| 4b | 2 | 0,47 | 0,91 | 282 | 129 | 8/120 | 4/600 |
| 4c | 3 | 0,41 | 1,15 | 292 | 156 | 8/120 | 4/600 |
| 4d | 4 | 0,35 | 1,35 | 298 | 181 | 8/120 | 4/600 |
| 4e | 5 | 0,30 | 1,61 | 296 | 218 | 8/120 | 4/600 |
| 4f | 8 | 0,14 | 2,48 | 284 | 349 | 8/120 | 4/600 |
| (Dichte des Isopropanols vor Behandlung der Teilchen: d = 0,785 g/ml) | | | | | | | |

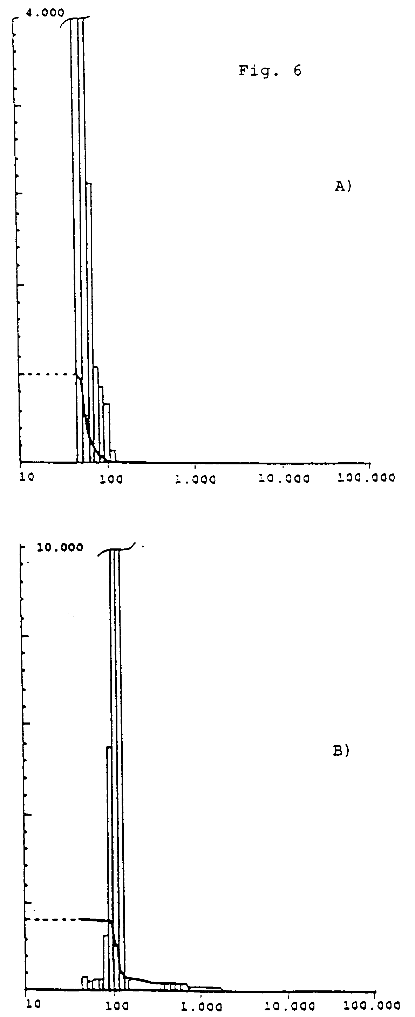

Die Porenradienverteilung der Teilchen nach Beispiel 4a) ist in Fig. 6A), die nach Beispiel 4e in Fig. 6B) dargestellt.

### Beispiel 5:

### Kugelförmige Teilchen auf der Basis von Aluminiumoxid wurden folgendermaßen hergestellt:

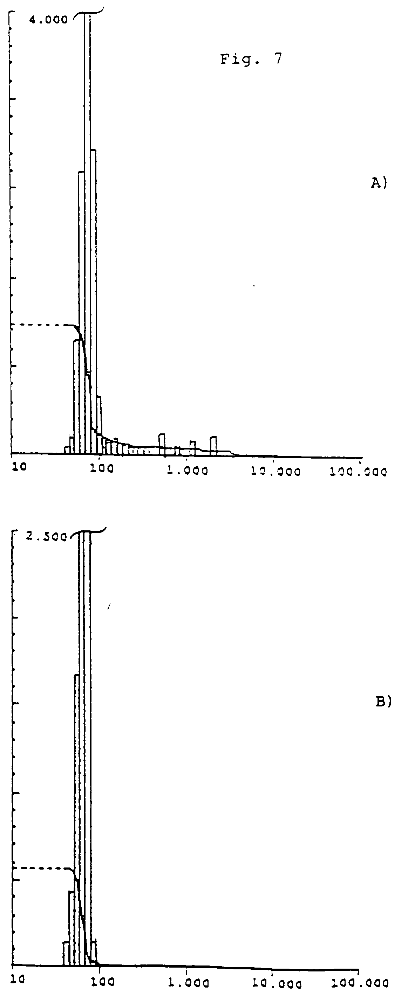

Ein metastabiles saures Aluminiumoxidhydratsol (Condea Disperal^{R} 30/1) mit einer Zusammensetzung aus 18,00 Gew.-% Al₂O₃ und 82,00 Gew.-% Wasser wurde in einer Vorrichtung nach Fig. 1 mittels einer elektrisch angetriebenen Sprühpistole (Bullcraft N, 80W) mit einem Durchsatz von 0,060 l/Minute von unten nach oben in die mit Ammoniakgas gefüllte Reaktionszone eingesprüht. Nachfolgend sind die weiteren Reaktionsbedingungen sowie die Eigenschaften der erhaltenen Teilchen angegeben:
- Vorlage:: 5 %ige Ammoniaklösung
- Alterung:: 0,5 h
- Alkoholbehandlung:: zweimal 2 h, Isopropanol
- Trocknen:: 8 h 120°
- Tempern:: 4 h 600°
- Durchmesser:: 0,02 - 0,05 mm
- Schüttgewicht:: 0,43 g/ml
- spezifische Oberfläche:: 291 m²/g
- Porenvolumen:: 1,19 ml/g
- Porenradienverteilung:: dargestellt in Fig. 7A).

### Beispiel 6:

### Kugelförmige Teilchen auf der Basis von Aluminiumoxid wurden folgendermaßen hergestellt:

Ein metastabiles saures Aluminiumhydratsol (Versal ^{R}900) mit einer Zusammensetzung aus 15,35 Gew.-% Al₂O₃, 0,38 Gew.-% HNO₃ und 84,27 Gew.-% Wasser wurde in einer Vorrichtung nach Figur 1 mittels Pumpe (2) bei einem Druck von 6 bar über 10 Kanülen (Durchmesser: 0,70 mm; Länge: 3,2 cm) wie bereits in Beispiel 3 beschrieben, mit einem Durchsatz von 0,75 l/Minute von unten nach oben versprüht.

Nachfolgend sind die weiteren Reaktionsbedingungen angegeben:
- Vorlage:: 5 %ige Ammoniaklösung
- Alterung:: 1 h
- Trocknen:: 10 h 180°C
- Tempern:: 6 h 600°C
- Durchmesser:: 0,4 - 0,6 mm
- Schüttgewicht:: 0,66 g/ml
- spezifische Oberfläche:: 190 m²/g
- Porenvolumen:: 0,58 ml/g
- Porenradienverteilung:: dargestellt in Fig. 7B)

### Beispiel 7:

### Kugelförmige Teilchen auf der Basis von Siliciumdioxid wurden folgendermaßen hergestellt:

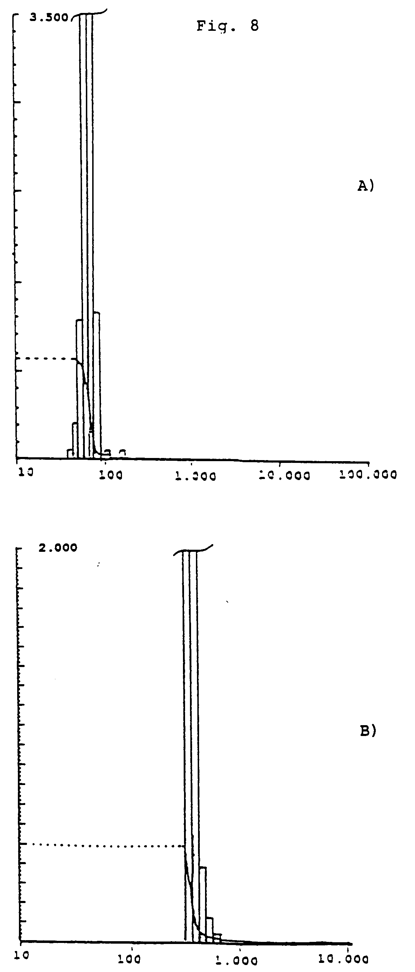

Ein metastabiles Kieselsol (Bayer 200S, 30 % SiO₂), angesäuert mit Salpetersäure bis auf pH4, wurde in einer Vorrichtung nach Fig. 1 mittels der Pumpe (2) bei einem Druck von 6,5 bar über 10 Kanülen (Durchmesser: 0,70 mm; Länge 3,20 cm) mit einem Durchsatz von 0,73 l/Minute von unten nach oben versprüht, wobei die Solstrahlen in die mit Ammoniakgas gefüllte Reaktionszone in gleichgroße Solperlen aufrissen. Nachfolgend sind die weiteren Reaktionsbedingungen sowie die Eigenschaften der erhaltenen Teilchen angegeben:
- Vorlage:: 5 %ige Ammoniaklösung
- Alterung:: 0,5 h
- Alkohol-Behandlung:: zweimal 2 h, Isopropanol
- Trocknen:: 8 h 120°
- Tempern:: 4 h 200°
- Durchmesser:: 0,4 - 0,6 mm
- Schüttgewicht:: 0,49 g/ml
- spezifische Oberfläche:: 297 m²/g
- Porenvolumen:: 0,80 ml/g
- Porenradienverteilung:: dargestellt in Fig. 8A)
- Oberflächenbeschaffenheit:: dargestellt in Fig.3B)

### Beispiel 8:

Nach dem erfindungsgemäßen Verfahren wurden kugelförmige Teilchen auf der Basis von Siliciumdioxid hergestellt.

Hierfür wurden jeweils separat eine saure Lösung A und eine alkalische Silikatlösung B hergestellt:

| | | |
|---|---|---|
| Lösung A | H₂SO₄ | 9,49 Gew.-% |
| | H₂O | 90,51 Gew.-% |
| | α_{20°} | 1,065 g/ml |
| Lösung B | Na₂O | 5,49 Gew.-% |
| | SiO₂ | 18,53 Gew.-% |
| | H₂O | 75,98 Gew.-% |
| | α_{20°} | 1,226 g/ml |

Die saure Lösung A und die alkalische Lösung B wurden in einer an sich bekannten Mischdüse bei einer Temperatur von ca. 25°C miteinander vermischt und in einer Vorrichtung gemäß Figur 1 sofort und kontinuierlich weiterverarbeitet.

Hierfür wurde das aus dem Zusammenmischen der beiden Komponenten unter einer Druckdifferenz von wenigstens 2 bar bei pH 8,3 erhaltene Sol über eine gebräuchliche kommerziell erhältliche Spiraldüse (Firma Spraybest, Greenfield, USA) in einer Menge von 1,2 l/Minute in einem Solstrahl (4) in den Fällturm (6) in der Weise einsprüht, daß der Solstrahl (4) bei Eintritt in den Fällturm (6) in Solperlen (5) aufriß.

Nach dem Durchfliegen einer gekrümmten Flugbahn durch das Reaktionsgas im Fällturm (6) wurden die Solperlen (5) in dem mit Reaktionsflüssigkeit gefüllten Auffangbehälter (8) aufgefangen. Als Reaktionsgas wurde HCl-Gas eingesetzt, welches über die Reaktionsgaszufuhr (7) ständig in den Fällturm (6) nachgefüllt wurde. Als Reaktionsflüssigkeit wurde eine wäßrige 2,5 %ige HCl-Lösung eingesetzt.

Die Teilchen wurden etwa 30 Minuten in der wäßrigen Chlorwasserstoff-Lösung gealtert und anschließend über das Sieb (9) von der Reaktionsflüssigkeit getrennt und in den Sammelbehälter (10) überführt. Die Reaktionsflüssigkeit wurde über die Pumpe (11) durch den Rücklauf (12) wieder zurück in den Auffangbehälter (8) gepumpt.

Die erhaltenen Teilchen wurden anschließend auf an sich bekannte Weise einem Basenaustausch mit 0,5 %iger Schwefelsäurelösung unterzogen, gewaschen bis zur Sulfatfreiheit, für 18 Stunden bei 180°C getrocknet und dann unterschiedlich weiterverarbeitet, wie in der nachfolgenden Tabelle 6 dargestellt. Man erhielt kugelförmige Alumosilikat-Teilchen mit Durchmessern im Bereich von 0,9 bis 1,5 mm, deren Eigenschaften ebenfalls in Tabelle 6 aufgeführt sind.

**Tabelle 6**

| Unterschiedliche Weiterbehandlungsschritte und Eigenschaften der gemäß Beispiel 8 erhaltenen Verfahrensprodukte | | | |
|---|---|---|---|
| Beispiel | 8a | 8b | 8c |
| Weiterbehandlung nach dem Trocknen | | 4 h 550° Hydrothermale Alterung 2 h 180°C 1 n NH₄OH | Aufweitung des Porenvolumens durch Isopropanol-Behandlung, 5 x |
| Temperung | 4 h 550°C | 4 h 600°C | 4 h 180°C |
| Durchmesser | 0,9-1,5mm | 0,9-1,5mm | 0,9-1,5mm |
| Schüttgewicht | 0,61 g/ml | 0,48 g/ml | 0,28 g/ml |
| Oberfläche | 722 m²/g | 27 m²/g | 650 m²/g |
| Porenvolumen | 0,49 ml/g | 0,50 ml/g | 1,90 ml/g |

Die Porenradienverteilung der gemäß Beispiel 8b erhaltenen Teilchen ist in Fig. 8B) dargestellt.

### Beispiel 9:

### Bestimmung der Abriebfestigkeit

Die Abriebfestigkeit der nach Beispiel 1 bis 8 hergestellten Teilchen wurde nach folgendem Verfahren zur Bestimmung der relativen Abriebfestigkeit untersucht: jeweils 1,0 g der zu untersuchenden Teilchen wurden in ein 10 ml-Schnappdeckelglas (45 x 22 mm) eingewogen und zweimal mit 5 ml voll entsalztem Wasser (VE-Wasser) gespühlt, um eventuell anhaftenden Staub zu entfernen. Das oberflächlich anhaftende Wasser wurde dabei mit einer Kapillare abgesaugt, so daß lediglich das in den Poren befindliche Wasser an den Teilchen verblieb. Es wurden dann erneut 5 ml VE-Wasser zugegeben und das verschlossene Glas 1 Minute auf einem Reagenzglasschüttlier (Fa. Heidolf, Reax 1R) bei 2.400 U/min geschüttelt. 2 ml der überstehenden Lösung wurden dann sofort in eine 10 mm-Küvette überführt und der Extinktionswert E mehrfach nach wiederholtem Aufschütteln bei einer Wellenlänge von 500 µm (Spektralphotometer CADAS 100, Firma Dr. Lange) gemessen. Bei E-Werten, die größer als 1 waren, wurde die Probe entsprechend verdünnt, wobei die Linearität der Meßwerte gegeben war.

Mechanisch stabile und damit abriebfeste Teilchen zeigen unter diesen Versuchsbedingungen E-Werte im Bereich von 0,1 bis 0,7.

Die folgende Tabelle 7 zeigt die bei diesem Test erhaltenen Werte für die relative Abriebfestigkeit der nach Beispiel 1 bis 8 hergestellten Teilchen. Ebenfalls enthält die Tabelle 7 Vergleichswerte für die Abriebfestigkeit von Aluminiumoxid-Teilchen, die nach dem bisherigen Stand der Technik hergestellt wurden.

**Tabelle 7**

| Abriebfestigkeit | | | | |
|---|---|---|---|---|
| Erfindungsgemäß hergestelltes Teilchen nach Beispiel | Material | Durchmesser mm | Porenvolumen ml/g | Extinktion E |
| 1 | SiO₂ | 2,5 - 3,5 | 1,01 | 0,60 |
| 3 a | Al₂O₃ | 0,4 - 0,6 | 0,73 | 0,26 |
| 3 b | Al₂O₃ | 0,4 - 0,6 | 0,72 | 0,25 |
| 3 c | Al₂O₃ | 0,4 - 0,6 | 0,61 | 0,18 |
| 3 d | Al₂O₃ | 0,4 - 0,6 | 0,25 | 0,15 |
| 4 a | Al₂O₃ | 0,4 - 0,6 | 0,75 | 0,22 |
| 4 b | Al₂O₃ | 0,4 - 0,6 | 1,61 | 0,57 |
| 5 | Al₂O₃ | 0,02 -0,05 | 1,19 | 0,29 |
| 6 | Al₂O₃ | 0,4 - 0,6 | 0,58 | 0,18 |
| 7 | SiO₂ | 0,4 - 0,6 | 0,80 | 0,71 |
| 8 b | SiO₂ | 0,9 - 1,5 | 0,50 | 0,37 |
| * Granulat | Al₂O₃ | 0,3 - 0,6 | 0,35 | 0,70 |
| * Granulat | Al₂O₃ | 0,3 - 0,6 | 0,70 | 10,10 |

| | | | | |
|---|---|---|---|---|
| * Vergleichsbeispiele für Granulate aus vergleichbarer Tonerdequalität | | | | |

## Patentansprüche

1. Verfahren zur Herstellung abriebfester, kugelförmiger Teilchen mit monomodaler Porenverteilung und hohem Porenvolumen auf Basis anorganischer Oxide durch Sol-Gel-Umwandlung, dadurch gekennzeichnet, daß ein Sol in einem Winkel von 80 bis 88° von unten direkt in eine ein Reaktionsgas enthaltende Reaktionszone so eingesprüht wird, daß das Sol unmittelbar vor oder bei Eintritt in die Reaktionszone in einzelne Solperlen aufreißt, die Solperlen die Reaktionszone auf einer gekrümmten Flugbahn durchfliegen, dabei vorverfestigt werden und die Solperlen in einer Auffangvorrichtung aufgefangen werden.

2. Verfahren nach Anspruch 1, dadurch gekennzeichnet, daß man Teilchen auf der Basis anorganischer Oxide aus der Gruppe Magnesiumoxid, Aluminiumoxid, Siliciumdioxid, Alumosilikat, Zinkoxid, Titandioxid, Chromoxid, Kupferoxid, Manganoxid, Ceroxid, Zinnoxid, Eisenoxid, Nickeloxid, Bleioxid, Molybdänoxid, Vanadiumoxid, Thoriumoxid, Zirkonium- und/oder Hafniumoxid herstellt.

3. Verfahren nach Anspruch 2, dadurch gekennzeichnet, daß man Teilchen auf der Basis von Aluminiumoxid und/oder Siliciumdioxid oder Alumosilikat herstellt.

4. Verfahren nach Anspruch 1, dadurch gekennzeichnet, daß man Teilchen mit einem durchschnittlichen Durchmesser im Bereich von 0,001 mm bis 5 mm, gemessen nach dem Trocknen, herstellt.

5. Verfahren nach Anspruch 1, dadurch gekennzeichnet daß man als Auffangvorrichtung eine Folie oder ein glattes, gegebenenfalls gekühltes Auffangblech oder einen mit einer Flüssigkeit gefüllten Auffangbehälter einsetzt.

6. Verfahren nach Anspruch 5, dadurch gekennzeichnet, daß man einen mit einer Reaktionslösung gefüllten Behälter einsetzt.

7. Verfahren nach Anspruch 6, dadurch gekennzeichnet, daß man als Reaktionsflüssigkeit wäßrige Ammoniaklösung und als Reaktionsgas Ammoniak einsetzt.

8. Verfahren nach Anspruch 6, dadurch gekennzeichnet, daß man als Reaktionsflüssigkeit eine zum Reaktionsgas äquivalente wäßrige Säure aus der Gruppe Salzsäure, Schwefelsäure oder Salpetersäure und als Reaktionsgas Chlorwasserstoff oder Schwefeldioxid oder Stickoxid einsetzt.

9. Verfahren nach Anspruch 1, dadurch gekennzeichnet, daß das Sol Füllstoffe aus der Gruppe Kieselsäuren, Alumosilikate, Aluminiumoxide, Titandioxid, Kaolin, Montmorillonit, Bentonit, Zeolith, Stärke, Holzmehl oder Aktivkohle enthält.

10. Verfahren nach Anspruch 1, dadurch gekennzeichnet, daß man die vorverfestigten Solperlen vor dem Trocknen mit einem niederen Alkylalkohol und/oder Aceton behandelt.

11. Verwendung der nach den Ansprüchen 1 bis 10 hergestellten Teilchen als Katalysatoren, Katalysatorträger, Ionenaustauscher, Adsorptions- oder Trockenmittel.

## Claims

1. A method for producing abrasion-resistant, spherical particles having a monomodal pore distribution and a high pore volume on the basis of inorganic oxides by sol-gel conversion, characterised in that a sol is sprayed at an angle of 80 to 88° from below directly into a reaction zone containing a reaction gas such that the sol breaks up into individual sol beads immediately before or upon entry into the reaction zone, the sol beads flow through the reaction zone on a curved trajectory, in so doing are pre-consolidated and the sol beads are collected in a collecting means.

2. A method according to Claim 1, characterised in that particles on the basis of inorganic oxides from the group magnesium oxide, aluminium oxide, silicon dioxide, alumosilicate, zinc oxide, titanium dioxide, chromium oxide, copper oxide, manganese oxide, cerium oxide, tin oxide, iron oxide, nickel oxide, lead oxide, molybdenum oxide, vanadium oxide, thorium oxide, zirconium oxide and/or hafnium oxide are produced.

3. A method according to Claim 2, characterised in that particles on the basis of aluminium oxide and/or silicon dioxide or alumosilicate are produced.

4. A method according to Claim 1, characterised in that particles having an average diameter in the range of 0.001 mm to 5 mm, measured after drying, are produced.

5. A method according to Claim 1, characterised in that a foil or a smooth, optionally cooled, collecting plate or a collecting container filled with a liquid is used as collecting device.

6. A method according to Claim 5, characterised in that a vessel filled with a reaction solution is used.

7. A method according to Claim 6, characterised in that aqueous ammonia solution is used as reaction liquid and ammonia as reaction gas.

8. A method according to Claim 6, characterised in that an aqueous acid from the group hydrochloric acid, sulphuric acid or nitric acid which is equivalent to the reaction gas is used and hydrogen chloride or sulphur dioxide or nitrogen oxide is used as reaction gas.

9. A method according to Claim 1, characterised in that the sol contains fillers from the group silicic acids, alumosilicates, aluminium oxides, titanium dioxide, kaolin, montmorillonite, bentonite, zeolite, starch, wood flour or activated carbon.

10. A method according to Claim 1, characterised in that the pre-consolidated sol beads are treated before drying with a lower alkyl alcohol and/or acetone.

11. The use of the particles produced according to Claims 1 to 10 as catalysts, catalyst supports, ion-exchangers, adsorption agents or drying agents.

## Revendications

1. Procédé de production de particules sphériques résistant à l'usure, avec distribution monomodale des pores et un volume de pores élevé, à base d'oxydes minéraux par conversion sol-gel, caractérisé en ce qu'un sol est pulvérisé par dessous, directement, dans une zone réactionnelle contenant un gaz réactionnel, selon un angle de 80 à 88°, de sorte que le sol se décompose en perles de sol individuelles directement devant l'entrée de la zone réactionnelle ou à l'entrée dans cette zone, en ce que les perles de sol traversent la zone réactionnelle sur une trajectoire courbe qui permet de les pré-consolider et en ce que les perles de sol sont recueillies dans un dispositif collecteur.

2. Procédé selon la revendication 1, caractérisé en ce qu'on produit des particules à base d'oxydes minéraux sélectionnés dans le groupe comprenant l'oxyde de magnésium, l'oxyde d'aluminium, le dioxyde de silicium, le silicate d'aluminium, l'oxyde de zinc, le dioxyde de titane, l'oxyde de chrome, l'oxyde de cuivre, l'oxyde de manganèse, l'oxyde de cérium, l'oxyde d'étain, l'oxyde de fer, l'oxyde de nickel, l'oxyde de plomb, l'oxyde de molybdène, l'oxyde de vanadium, l'oxyde de thorium, l'oxyde de zirconium et/ou l'oxyde d'hafnium.

3. Procédé selon la revendication 2, caractérisé en ce qu'on produit des particules à base d'oxyde d'aluminium et/ou de dioxyde de silicium ou de silicate d'aluminium.

4. Procédé selon la revendication 1, caractérisé en ce qu'on produit des particules d'un diamètre moyen dans la plage de 0,001 à 5 mm, mesuré après séchage.

5. Procédé selon la revendication 1, caractérisé en ce qu'on utilise comme dispositif collecteur une feuille ou une tôle collectrice lisse, éventuellement refroidie, ou un récipient collecteur rempli d'un liquide.

6. Procédé selon la revendication 5, caractérisé en ce qu'on utilise un récipient rempli d'une solution réactionnelle.

7. Procédé selon la revendication 6, caractérisé en ce qu'on utilise comme liquide réactionnel une solution aqueuse d'ammoniac et comme gaz réactionnel de l'ammoniac.

8. Procédé selon la revendication 6, caractérisé en ce qu'on utilise comme liquide réactionnel un acide aqueux équivalent au gaz réactionnel, sélectionné dans le groupe contenant l'acide chlorhydrique, l'acide sulfurique ou l'acide nitrique et comme gaz réactionnel du gaz chlorhydrique ou de l'anhydride sulfureux ou de l'oxyde d'azote.

9. Procédé selon la revendication 1, caractérisé en ce que le sol contient des charges sélectionnées dans le groupe comprenant les acides siliciques, les silicates d'aluminium, les oxydes d'aluminium, le dioxyde de titane, le kaolin, la montmorillonite, la bentonite, une zéolite, l'amidon, la farine de bois ou le charbon activé.

10. Procédé selon la revendication 1, caractérisé en ce qu'on traite les perles de sol pré-consolidées avant séchage avec un alcool alkylique inférieur et/ou de l'acétone.

11. Utilisation des particules produites selon les revendications 1 à 10 comme catalyseurs, supports catalytiques, échangeurs d'ions, agents d'adsorption ou de séchage.
